# EUROPÄISCHE PATENTSCHRIFT

(11) **EP 4 201 807 B1**
(45) Veröffentlichungstag und Bekanntmachung des Hinweises auf die Patenterteilung: **04.06.2025**
(21) Anmeldenummer: 21216430.5
(22) Anmeldetag: 21.12.2021
(51) Int. Cl.: B64C 1/06, B64D 13/00

(54) **VERFAHREN UND VORRICHTUNG ZUM REDUZIEREN VON KONDENSATAUSFALL AN INNEREN OBERFLÄCHEN EINER FLUGZEUGAUSSENHAUT UND BENACHBARTEN BAUTEILEN**
METHOD AND APPARATUS FOR REDUCING CONDENSATE ON INNER SURFACES OF AN AIRCRAFT OUTER SKIN AND ADJACENT COMPONENTS
PROCÉDÉ ET DISPOSITIF DE RÉDUCTION DE LA CHUTE DE CONDENSATION SUR LES SURFACES INTÉRIEURES D'UN REVÊTEMENT EXTÉRIEUR D'AVION ET DE COMPOSANTS ADJACENTS

(43) Veröffentlichungstag der Anmeldung: 28.06.2023
(73) Patentinhaber: Fraunhofer-Gesellschaft zur Förderung der angewandten Forschung e.V., 80686 München (DE)
(72) Erfinder: Norrefeldt, Victor, 83626 Valley (DE); Pathak, Arnav, 83626 Valley (DE); Riedl, Gerhard, 83626 Valley (DE)
(74) Vertreter: Friese Goeden Patentanwälte PartGmbB

(56) Entgegenhaltungen:
- WO-A1-00/37313
- US-A1- 2011 009 042
- US-A1- 2012 199 315
- US-A1- 2021 339 872

## Beschreibung

Die Erfindung betrifft ein Verfahren zum Reduzieren von Kondensatausfall an inneren Oberflächen einer Flugzeugaußenhaut und benachbarten Bauteilen, wobei der Kondensatausfall durch Zufuhr von trockener Luft in einen oberen Bereich eines zwischen dem oberen Bereich und einem unteren Bereich sich erstreckenden Luftspaltes zwischen der Flugzeugaußenhaut und einer Dämmung, die zwischen einer Kabinenwand und der Flugzeugaußenhaut angeordnet ist. Die Erfindung betrifft auch eine Vorrichtung zur Durchführung dieses Verfahrens.

Ein derartiges Verfahren und eine Vorrichtung zur Durchführung dieses Verfahrens sind aus der US 6491254 B1 bekannt. Dort wird die dem Luftspalt zwischen der Flugzeugaußenhaut und der Dämmung zugeführte trockene Luft von einem in einer Klimaanlage aufbereiteten Luftstrom abgezweigt, dessen anderer Teil der Kabine zugeführt wird, wobei die in der Klimaanlage aufbereitete Luft Zapfluft aus einem Verdichter eines Flugzeugtriebwerks ist. Die dem Luftspalt zwischen der Flugzeugaußenhaut und der Dämmung zugeführte trockene Luft wird dem Luftspalt über mit der Klimaanlage verbundene Leitungen und Strömungssteuerventile und einer Vielzahl von in dem Luftspalt verteilt angeordneten Luftaustrittsdüsen zugeführt, wobei sich in dem Luftspalt im Reiseflug ein gegenüber dem in der Kabine herrschenden Luftdruck erhöhter Luftdruck ausbildet, der ein durch den Kamineffekt (engl.: "stack effect")erzeugtes Überströmen von Kabinenluft durch die Dämmung hindurch in den Luftspalt verhindert. Die Verwendung von Verdichterzapfluft und deren Aufbereitung in einer auch Luft für die Kabine liefernden Klimaanlage, um die dem Luftspalt zuzuführende trockene Luft zu gewinnen, erfordert eine gesteigerte Leistung der Klimaanlage, mehr Gewicht und höhere Kosten der Klimaanlage infolge der erforderlichen Leistungssteigerung und damit einen höheren Energieverbrauch des Flugzeugs.

Bei einem aus der US 5386952 bekannten Verfahren zum Reduzieren von Kondensatausfall an inneren Oberflächen einer Flugzeugaußenhaut und benachbarten Bauteilen wird mittels mehrerer in der Flugzeugkabine in Bodennähe verteilt angeordneten Geräten zur Luftentfeuchtung Kabinenluft in Bodennähe angesaugt, entfeuchtet und erwärmt und danach in den Luftspalt zwischen der Flugzeugaußenhaut und der Dämmung an in Flugzeuglängsrichtung verteilten Stellen in Bodennähe eingeblasen. Die in den Luftspalt eingeblasene trockene und erwärmte Luft aus der Kabine verteilt sich in dem Luftspalt und hat einen höheren Druck als der in der Kabine herrschende Luftdruck. Infolgedessen tritt Luft aus dem Luftspalt durch die Dämmung hindurch wieder in die Kabine ein. Zwar werden auch auf diese Weise Kondensatausfall und resultierende Eisbildung an den den Luftspalt begrenzenden kalten Oberflächen der Flugzeugaußenhaut und der benachbarten Bauteile vermieden, aber der Einsatz von Geräten zur Luftentfeuchtung und -erwärmung von Kabinenluft zur Gewinnung der in den Luftspalt eingebrachten trockenen Luft beansprucht zusätzlichen Platz im Flugzeug, erhöht das Gewicht des Flugzeugs und steigert dessen Stromverbrauch und Anschaffungs- und Betriebskosten, so dass die durch die Vermeidung von Kondensat- und Eisbildung im Luftspalt gewonnenen Vorteile durch die mit dem Einsatz von Luftentfeuchtungsgeräten zur Gewinnung trockener Luft für den Eintrag in den Luftspalt verbundenen Nachteile wieder kompensiert werden.

Ferner ist aus der US 2021/0122476 A1 ein Verfahren zum Reduzieren von Kondensatausfall an inneren Oberflächen einer Flugzeugaußenhaut und benachbarten Bauteilen bekannt, bei dem mittels Leitungen und steuerbaren Ventilen in einer Klimaanlage aufbereitete trockene Luft in einen Raum oberhalb der Kabinendecke (engl.: "crown region")geblasen wird, wobei aus diesen oder separaten Leitungen in dieser oder einer separaten Klimaanlage aufbereitete Luft gleichzeitig oder auch im Wechsel zu der in den oberen Raum geblasenen Luft Kabinenluft in die Kabine geblasen wird. Damit wird auch bei diesem Verfahren die in den Raum oberhalb der Kabinendecke eingeblasene trockene Luft von einer Klimaanlage bereitgestellt, die ihrerseits mit Verdichterzapfluft gespeist wird. Die Gewinnung der eine höhere Temperatur und eine höhere Luftfeuchtigkeit aufweisende Kabinenluft als die in den Raum oberhalb der Kabinendecke eingeblasene trockene Luft mittels der gleichen Klimaanlage oder einer separaten Klimaanlage erfordert einen hohen apparativen und steuertechnischen Aufwand, der zusätzliche Kosten und auch zusätzliches Gewicht verursacht, so dass der durch die Vermeidung eines zusätzlichen speziell für die Gewinnung der trockenen Luft eingesetzten Luftentfeuchters gewonnenen Vorteil durch den mit dem zusätzlichen apparativen und steuertechnischen Aufwand verbundenen Nachteil kompensiert wird. Ein weiteres Beispiel findet sich im Dokument US 2021/339872 A1.

Die Aufgabe der Erfindung besteht darin, das eingangs beschriebene Verfahren zum Reduzieren von Kondensatausfall an inneren Oberflächen einer Flugzeugaußenhaut und benachbarten Bauteilen so zu gestalten, dass die Gewinnung der trockenen Luft, die in den oberen Bereich des zwischen dem oberen Bereich und einem unteren Bereich sich erstreckenden Luftspaltes zwischen der Flugzeugaußenhaut und einer Dämmung, die zwischen der Kabinenwand und der Flugzeugaußenhaut angeordnet ist, mit einem apparativ und energetisch geringeren Aufwand als bisher erfolgt, wobei das Verfahren nicht nur beim Bau neuer Flugzeuge sondern auch bei der Nachrüstung vorhandener Flugzeuge berücksichtigt werden kann. Auch soll eine Vorrichtung zur Durchführung dieses Verfahrens angegeben werden.

Die Aufgabe der Erfindung wird hinsichtlich des Verfahrens dadurch gelöst, dass gemäß dem kennzeichnenden Teil von Anspruch 1 die trockene Luft durch Absaugung aus dem unteren Bereich des Luftspaltes gewonnen wird und in einer oder mehreren Leitungen zum oberen Bereich des Luftspaltes geführt wird, wo sie in den Luftspalt wieder eintreten gelassen wird.

Hinsichtlich der Vorrichtung wird die Aufgabe der Erfindung dadurch gelöst, dass gemäß dem kennzeichnenden Teil des Anspruchs 6 die Leitung oder die Leitungen eine oder mehrere Eintrittsöffnungen am unteren Bereich des Luftspaltes hat bzw. haben, durch die hindurch trockene Luft im unteren Bereich des Luftspaltes absaugbar ist und dass die Leitung oder die Leitungen mit einem oder mehreren Lüftern verbunden ist bzw. sind, der oder die im Betrieb eine Druckdifferenz in der oder den Leitungen erzeugt bzw. erzeugen, welche die trockene Luft von der oder den Eintrittsöffnungen zu der oder den Austrittsöffnungen bewegt.

Vorteilhafte Weiterbildungen des erfindungsgemäßen Verfahrens sind Gegenstand der Ansprüche 2 bis 7, und vorteilhafte Weiterbildungen der erfindungsgemäßen Vorrichtung sind Gegenstand der Ansprüche 8 bis 20.

Der Erfindung liegt die Beobachtung zu Grunde, dass im Flug in den oberen Bereich des Luftspaltes warme und feuchte Luft aus der Kabine durch die nicht luftdichte Kabinenwand und die luftdurchlässige Dämmung hindurch einströmt, denn zwischen der Kabine und dem oberen Bereich des Luftspaltes herrscht ein Temperaturgradient, der zu einer thermisch induzierten Druckdifferenz führt, welche diese Luftströmung hervorruft. Typischerweise hat diese in den Luftspalt einströmende Luft eine Temperatur von etwa 20°C und eine relative Luftfeuchte RH von etwa 10%. Im Flug herrschen niedrige Außentemperaturen, die auch die Flugzeugaußenhaut und benachbarte Bauteile hinter der Dämmung kalt werden lassen. Die in den Luftspalt eingeströmte Luft kühlt sich ebenfalls ab. Da kalte Luft eine höhere Dichte hat, strömt diese hinter der Dämmung nach unten, wo sie wieder aus der Dämmung austreten würde, wenn sie erfindungsgemäß nicht abgesaugt werden würde. Die hinter der Dämmung nach unten strömende Luft ist trocken, da sie durch Kondensation an der kalten Flugzeugaußenhaut und den kalten benachbarten Bauteilen entfeuchtet wurde. Der Erfindungsgedanke besteht darin, diese Luft im unteren Bereich des Luftspaltes abzusaugen und oben insbesondere an zu schützenden Stellen wieder einzublasen, wodurch ein Umlauf trockener Luft entsteht. Der untere Bereich des Luftspaltes, wo die trockene Luft abgesaugt wird, stellt eine "kostenlose" oder zumindest "billige" Quelle trockener Luft dar.

Ein Vorteil des erfindungsgemäßen Verfahrens besteht darin dass die Nutzung der Flugzeugaußenhaut als Entfeuchtungseinheit und das Absaugen hierdurch entfeuchteter Luft energieeffizienter ist als die bekannten Lösungen, bei denen die Luft aktiv entfeuchtet wird oder frische Zapfluft aus dem Triebwerk verwendet wird.

Die Verwendung eines oder mehrerer Lüfter in der erfindungsgemäßen Vorrichtung zur Durchführung des Verfahrens ist vorteilhaft, denn ein Lüfter benötigt typischerweise nur wenige Watt, während eine maschinelle Entfeuchtung aufgrund des Phasenwechsels und der bereits relativ trockenen Kabinenluft, die eine relative Feuchte von etwa 10% RH aufweist, mit hohem Aufwand verbunden ist. Auch Frischluft von außen, die eine Temperatur von etwa -50°C hat, ist eine "teure" Quelle für trockene Luft, da diese zunächst auf Kabinendruck komprimiert und anschließend konditioniert werden muss.

Durch die mit dem erfindungsgemäßen Verfahren bewirkte Reduzierung des Kondensatausfalls an der kalten Flugzeugaußenhaut und den benachbarten kalten Bauteilen, wird auch das Risiko der Bildung von Eis, das schmilzt, wenn die Flugzeugaußenhaut und die benachbarten Bauteile wieder warm werden, und zu Wasser wird, das unkontrolliert in die Kabine und auf die Passagiere abtropfen kann (Stichwort: "Rain in the plane"), reduziert.

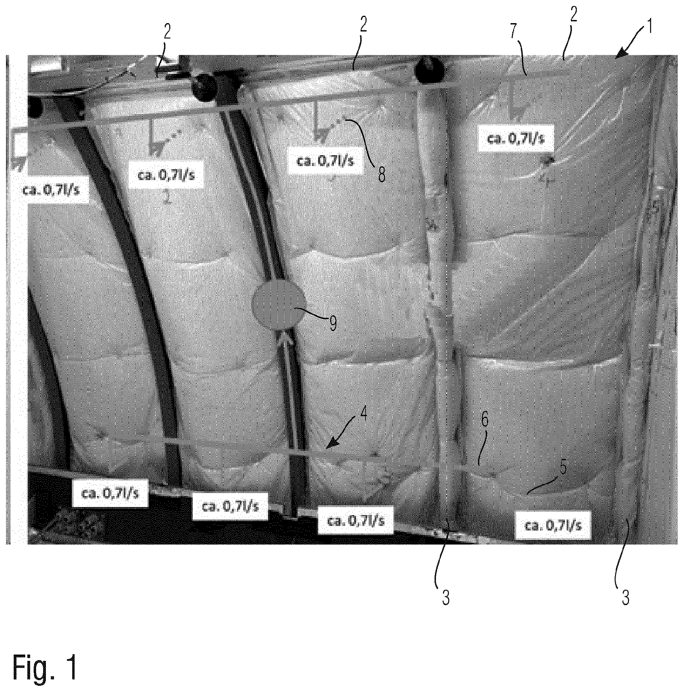

Ein Ausführungsbeispiel ist in der Zeichnung schematisch dargestellt und wird im Folgenden unter Bezugnahme auf diese Zeichnung näher beschrieben, wobei die Zeichnung eine Draufsicht auf einen Ausschnitt der Dämmung bei entfernter Kabinenwand von der Kabine aus zeigt.

Wie die Zeichnung zeigt befindet sich eine Dämmung 1 in Form einer Matte in den Spantfeldern 2 zwischen benachbarten Spanten 3 eines nicht näher dargestellten Flugzeugs. Die Dämmung ist zwischen der nicht dargestellten Kabinenwand und der nicht sichtbaren Flugzeugaußenhaut angeordnet, wobei zwischen der Dämmung 1 und der Flugzeugaußenhaut ein nicht sichtbarer Luftspalt ausgebildet ist, an den auch noch andere zu der Flugzeugaußenhaut benachbarte Bauteile wie z.B. die Spanten 3 grenzen. Ein aus mehreren Leitungsabschnitten in Form von Schläuchen bestehendes, schematisch dargestelltes Leitungsnetz 4 dient zur Förderung von trockener Luft aus einem unteren Bereich des Luftspaltes in den oberen Bereich des Luftspaltes. Das Leitungsnetz 4 weist mehrere erste Leitungsabschnitte 5 auf, die durch Durchgänge in der Dämmung 1 hin zum unteren Bereich des Luftspaltes geführt sind und dort nicht dargestellte Lufteintrittsöffnungen aufweisen. Das Leitungsnetz 4 weist ferner zweite Leitungsabschnitte auf, zu denen eine Sammelleitung 6 und eine Verteilerleitung 7 gehören. Die ersten Leitungsabschnitte 5 sind über nicht dargestellte Mehrwegeventile mit der Sammelleitung 6 verbunden, und die Verteilerleitung 7 ist über nicht dargestellte Mehrwegeventile mit mehreren dritten Leitungsabschnitten 8 verbunden, die jeweils durch Durchgänge in der Dämmung 1 hin zum oberen Bereich des Luftspaltes geführt sind, wo sie nicht dargestellte Luftaustrittsöffnungen aufweisen. Ein intermittierend betreibbarer Lüfter 9 ist mit seiner Eintrittsseite an die Sammelleitung 6 angeschlossen und ist mit seiner Austrittsseite an die Verteilerleitung 7 angeschlossen. Das Leitungsnetz 4 befindet sich weitgehend im Raum zwischen der Dämmung 1 und der Kabinenwand. Auch der Lüfter 9 ist dort angeordnet. Alternativ könnte er aber auch aus Platzgründen in einem Raum oberhalb der Kabinendecke angeordnet werden. In jedem Spantfeld 2 ist jeweils ein erster Leitungsabschnitt 5 und jeweils ein dritter Leitungsabschnitt 8 angeordnet. Alternativ kann die Anordnung der ersten und dritten Leitungsabschnitte 5, 8 in Bezug auf die Spantfelder 2 beispielsweise aus Platzgründen oder aus Gründen einer effektiveren Luftabsaugung oder Einblasung auch anders getroffen werden.

Wenn der Lüfter 9 eingeschaltet ist, erzeugt er im Leitungsnetz 4 eine Druckdifferenz, die dazu führt, dass trockene Luft im unteren Bereich des Luftspaltes in die Eintrittsöffnungen der ersten Leitungsabschnitte 5 eingesaugt und über die Sammelleitung 6 und die Verteilerleitung 7 zu den dritten Leistungsabschnitten 8 bewegt wird, wo sie über deren Austrittsöffnungen in den oberen Bereich des Luftspaltes wieder eingeblasen wird. Statt einem Lüfter 9 können auch bei Bedarf mehrere Lüfter eingesetzt werden.

Der oder die Lüfter werden temperaturabhängig aus- und eingeschaltet. Zum Beispiel wird der oder werden die Lüfter eingeschaltet, wenn im Flug die Außentemperatur beispielsweise unter etwa -7°C oder etwa -9°C oder etwa -5°C sinkt.

Bei Tests wurde festgestellt, dass der Leckagestrom hinter der Dämmebene, also vorbei an der kalten Flugzeugaußenhaut, etwa 0,7 bis 1,4 l/s pro Spantfeld beträgt. Um das Überströmen von warm-feuchter Kabinenluft hinter die Dämmebene zu verhindern, musste etwa diese Menge an alternativer Luft aufgebracht werden, wobei etwas mehr oder weniger je nach Dichtigkeit der Kabinenwand natürlich erforderlich ist.

Ferner wurde festgestellt, dass das Kondensationsproblem nur dann auftritt, wenn die Temperatur der Außenhaut unter den Taupunkt der Kabinenluft fällt. Die Luft in der Kabine hat typischerweise im Flug 10 - 15% relative Feuchte bei 23°C. Dies entspricht einer Taupunkttemperatur von etwa -7°C. Erst unter dieser Temperatur ist das Luftzirkulationssystem zu aktivieren. Im einfachsten Fall kann die Regelung mit einem Ein/Ausschalter vorgenommen werden, der ab dem Unterschreiten einer Grenztemperatur das System mit einem festen Volumenstrom aktiviert.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Verfahren zum Reduzieren von Kondensatausfall an inneren Oberflächen einer Flugzeugaußenhaut, wobei der Kondensatausfall durch Zufuhr von trockener Luft in einen oberen Bereich eines zwischen dem oberen Bereich und einem unteren Bereich sich erstreckenden Luftspaltes zwischen der Flugzeugaußenhaut und einer Dämmung (1) reduziert wird, wobei die Dämmung zwischen einer Kabinenwand und der Flugzeugaußenhaut angeordnet ist, **dadurch gekennzeichnet, dass** die trockene Luft durch Absaugung aus dem unteren Bereich des Luftspaltes gewonnen wird und in einer oder mehreren Leitungen zum oberen Bereich des Luftspaltes geführt wird, wo sie in den Luftspalt wieder eintritt.

2. Verfahren nach Anspruch 1, **dadurch gekennzeichnet, dass** die trockene Luft an mehreren in Flugzeuglängsrichtung beabstandeten Austrittsstellen des unteren Bereichs des Luftspaltes abgesaugt und an mehreren in Flugzeuglängsrichtung beabstandeten Eintrittsstellen des oberen Bereiches des Luftpaltes in diesen wieder eintreten gelassen wird, wobei die trockene Luft zwischen den Aus- und Eintrittsstellen durch ein die mehreren Leitungen aufweisendes Leitungsnetz (4) geführt wird, in welchem eine die trockene Luft von den Austrittsstellen zu den Eintrittsstellen bewegende Druckdifferenz erzeugt wird.

3. Verfahren nach Anspruch 2, **dadurch gekennzeichnet, dass** an jeder Austrittsstelle jeweils ein Volumenstrom aus trockener Luft im Bereich zwischen 0,7 l/s und 1,4 l/s aus dem Luftspalt abgesaugt wird und/oder dass an jeder Eintrittsstelle jeweils ein Volumenstrom aus trockener Luft im Bereich zwischen etwa 0,7 l/s und etwa 1,4 l/s in den Luftspalt eintritt.

4. Verfahren nach einem der Ansprüche 1 bis 3, **dadurch gekennzeichnet, dass** die Absaugung trockener Luft aus dem unteren Bereich des Luftspaltes und/oder die Zufuhr der trockenen Luft in den oberen Bereich des Luftspaltes intermittierend erfolgt bzw. erfolgen.

5. Verfahren nach einem der Ansprüche 1 bis 4, **dadurch gekennzeichnet, dass** die Zufuhr der trockenen Luft in den oberen Bereich des Luftspaltes nur bei einer vorbestimmten Außentemperatur der die Flugzeugaußenhaut umgebenden Luft erfolgt oder
dass dass die Zufuhr der trockenen Luft in den oberen Bereich des Luftspaltes nur bei einer Außentemperatur der die Flugzeugaußenhaut umgebenden Luft von etwa 0°C oder weniger oder etwa -7°C oder weniger erfolgt.

6. Vorrichtung zur Durchführung des Verfahrens nach einem der Ansprüche 1 bis 5, mit einer oder mehreren Leitungen für die Zufuhr von trockener Luft durch eine oder mehrere Austrittsöffnungen der Leitung oder der Leitungen in einen oberen Bereich eines zwischen dem oberen Bereich und einem unteren Bereich sich erstreckenden Luftspaltes zwischen der Flugzeugaußenhaut und einer Dämmung (1), die zwischen einer Kabinenwand und der Flugzeugaußenhaut angeordnet ist, **dadurch gekennzeichnet, dass** die Leitung oder die Leitungen eine oder mehrere Eintrittsöffnungen am unteren Bereich des Luftspaltes hat bzw. haben, durch die hindurch trockene Luft im unteren Bereich des Luftspaltes absaugbar ist und dass die Leitung oder die Leitungen mit einem oder mehreren Lüftern (9)verbunden ist bzw. sind, der oder die im Betrieb eine Druckdifferenz in der oder den Leitungen erzeugt bzw. erzeugen, welche die trockene Luft von der oder den Eintrittsöffnungen zu der oder den Austrittsöffnungen bewegt.

7. Vorrichtung nach Anspruch 6, **dadurch gekennzeichnet, dass** der oder die Lüfter (9) intermittierend betreibbar ist bzw. sind und/oder
dass der oder die Lüfter (9) in einem Raum oberhalb eines oberen Abschnittes der Kabinenwand angeordnet ist bzw. sind.

8. Vorrichtung nach Anspruch 6 oder 7, **dadurch gekennzeichnet, dass** sich die Eintrittsöffnungen an ersten Leitungsabschnitten (5) befinden, die unterhalb der Dämmung (1) und/oder in Durchgängen in der Dämmung (1) zwischen dem Luftspalt und einem Raum zwischen der Dämmung und der Kabinenwand verlaufen und mit zweiten Leitungsabschnitten verbunden sind, die in dem Raum zwischen der Dämmung und der Kabinenwand angeordnet sind und/oder
dass jede Eintrittsöffnung und/oder jede Austrittsöffnung jeweils im Bereich zwischen zwei Spanten angeordnet ist bzw. sind.

9. Vorrichtung nach einem der Ansprüche 6 bis 8, **dadurch gekennzeichnet, dass** sich die Austrittsöffnungen an dritten Leitungsabschnitten (8) befinden, die oberhalb der Dämmung und/oder in weiteren Durchgängen in der Dämmung (1) zwischen dem Raum zwischen der Kabinenwand und der Dämmung (1) und dem Luftspalt verlaufen und mit den zweiten Leitungsabschnitten verbunden sind.

10. Vorrichtung nach Anspruch 8 oder 9, **dadurch gekennzeichnet, dass** die zweiten Leitungsabschnitte über erste Ventile mit den ersten Leitungsabschnitten (5) verbunden sind.

11. Vorrichtung nach Anspruch 9 oder 10, **dadurch gekennzeichnet, dass** die zweiten Leitungsabschnitte mit den dritten Leitungsabschnitten (8) über zweite Ventile verbunden sind.

12. Vorrichtung nach einem der Absprüche 8 bis 11, **dadurch gekennzeichnet, dass** der oder die Lüfter (9) auf seiner oder ihrer Eintrittsseite und seiner oder ihrer Austrittsseite jeweils mit den zweiten Leitungsabschnitten verbunden sind.

13. Vorrichtung nach einem der Ansprüche 8 bis 12, **dadurch gekennzeichnet, dass** die zweiten Leitungsabschnitte eine Sammelleitung (6) aufweisen, die mit den ersten Leitungsabschnitten (5) verbunden ist und/oder dass die zweiten Leitungsabschnitte eine Verteilerleitung (7) aufweisen, die mit den dritten Leitungsabschnitten (8) verbunden ist.

14. Vorrichtung nach Anspruch 13, **dadurch gekennzeichnet, dass** die Verteilerleitung (7) an die Austrittsseite eines Lüfters (9) angeschlossen ist und dass die Sammelleitung an die Eintrittsseite des Lüfters (9) angeschlossen ist.

15. Vorrichtung nach einem der Ansprüche 10 bis 14, **dadurch gekennzeichnet, dass** die ersten Ventile und/oder die zweiten Ventile jeweils Mehrwegeventile sind.

## Claims

1. Method for reducing condensate precipitate on inner surfaces of an outer skin of an aircraft, the condensate precipitate being reduced by supplying dry air into an upper region of an air gap, which extends between the upper region and a lower region, between the outer skin of an aircraft and an insulation (1), the insulation being arranged between a cabin wall and the outer skin of an aircraft, **characterized in that** the dry air is obtained by sucking it off from the lower region of the air gap and is conducted in one or more lines to the upper region of the air gap, where it re-enters the air gap.

2. Method according to claim 1, **characterized in that** the dry air is sucked off at a plurality of outlet points of the lower region of the air gap that are spaced in the longitudinal direction of the aircraft and, at a plurality of inlet points of the upper region of the air gap that are spaced in the longitudinal direction of the aircraft, is allowed to reenter it, the dry air being guided between the outlet and inlet points through a network of lines (4) comprising the plurality of lines, in which network a pressure difference which moves the dry air from the outlet points to the inlet points is generated.

3. Method according to claim 2, **characterized in that** a volumetric flow of dry air in the range between 0.7 I/s and 1.4 I/s is sucked out of the air gap at each outlet point and/or
**in that** a volumetric flow of dry air in the range between about 0.7 I/s and about 1.4 I/s enters the air gap at each inlet point.

4. Method according to any one of claims 1 to 3, **characterized in that** the dry air is sucked off from the lower region of the air gap and/or the dry air is supplied to the upper region of the air gap intermittently.

5. Method according to any one of claims 1 to 4, **characterized in that** the dry air is only supplied to the upper region of the air gap at a predetermined outside temperature of the air surrounding the outer skin of the aircraft, or
**in that** the dry air is only supplied to the upper region of the air gap at an outside temperature of the air surrounding the outer skin of the aircraft of about 0°C or less or about -7°C or less.

6. Device for carrying out the method according to any one of claims 1 to 5, comprising one or more lines for supplying dry air through one or more outlet openings of the line or lines to an upper region of an air gap, which extends between the upper region and a lower region, between the outer skin of an aircraft and an insulation (1) arranged between a cabin wall and the outer skin of an aircraft, **characterized in that** the line or lines has or have one or more inlet openings at the lower region of the air gap, through which dry air can be sucked off in the lower region of the air gap, and **in that** the line or lines is or are connected to one or more fans (9) which, in operation, generates or generate a pressure difference in the line or lines, which moves the dry air from the inlet opening or openings to the outlet opening or openings.

7. Device according to claim 6, **characterized in that** the fan or fans (9) is or are intermittently operable and/or
**in that** the fan or fans (9) is or are arranged in a space above an upper section of the cabin wall.

8. Device according to claim 6 or 7, **characterized in that** the inlet openings are located at first line sections (5) extending below the insulation (1) and/or in passages in the insulation (1) between the air gap and a space between the insulation and the cabin wall and are connected to second line sections arranged in the space between the insulation and the cabin wall and/or
**in that** each inlet opening and/or each outlet opening is or are respectively arranged in the region between two frames.

9. Device according to any one of claims 6 to 8, **characterized in that** the outlet openings are located at third line sections (8) which run above the insulation and/or in further passages in the insulation (1) between the space between the cabin wall and the insulation (1) and the air gap and are connected to the second line sections.

10. Device according to claim 8 or 9, **characterized in that** the second line sections are connected to the first line sections (5) via first valves.

11. Device according to claim 9 or 10, **characterized in that** the second line sections are connected to the third line sections (8) via second valves.

12. Device according to any one of claims 8 to 11, **characterized in that** the fan or fans (9) are each connected to the second line sections on its or their inlet side and its or their outlet side.

13. Device according to any one of claims 8 to 12, **characterized in that** the second line sections have a collection line (6) which is connected to the first line sections (5) and/or
**in that** the second line sections have a distribution line (7) which is connected to the third line sections (8).

14. Device according to claim 13, **characterized in that** the distribution line (7) is connected to the outlet side of a fan (9) and **in that** the collection line is connected to the inlet side of the fan (9).

15. Device according to any one of claims 10 to 14, **characterized in that** the first valves and/or the second valves are each multiple-way valves.

## Revendications

1. Procédé de réduction de la perte de condensation sur les surfaces intérieures d'un revêtement extérieur d'un avion,
dans lequel la perte de condensation est réduite par amenée d'air sec vers une zone supérieure d'un interstice d'air s'étendant entre la zone supérieure et une zone inférieure et situé entre le revêtement extérieur de l'avion et un isolant (1), l'isolant étant disposé entre une paroi de la cabine et le revêtement extérieur de l'avion,
**caractérisé en ce que** l'air sec est récupéré par aspiration hors de la zone inférieure de l'interstice d'air et est guidé dans un ou plusieurs conduits vers la zone supérieure de l'interstice d'air, où il entre à nouveau dans l'interstice d'air.

2. Procédé selon la revendication 1,
**caractérisé en ce que** l'air sec est aspiré en plusieurs points de sortie de la zone inférieure de l'interstice d'air, espacés dans la direction longitudinale de l'avion, et est autorisé à entrer à nouveau dans la zone supérieure de l'interstice d'air en plusieurs points d'entrée de la zone supérieure de l'interstice d'air, espacés dans la direction longitudinale de l'avion, l'air sec étant guidé entre les points de sortie et d'entrée par un réseau de conduits (4) qui présente lesdits plusieurs conduits et dans lequel est générée une différence de pression déplaçant l'air sec des points de sortie vers les points d'entrée.

3. Procédé selon la revendication 2,
**caractérisé en ce que**, à chaque point de sortie, un flux volumique d'air sec compris entre 0,7 l/s et 1,4 l/s est respectivement aspiré hors de l'interstice d'air, et/ou
**en ce que**, à chaque point d'entrée, un flux volumique d'air sec compris entre environ 0,7 l/s et environ 1,4 l/s entre respectivement dans l'interstice d'air.

4. Procédé selon l'une des revendications 1 à 3,
**caractérisé en ce que** l'aspiration d'air sec hors de la zone inférieure de l'interstice d'air et/ou l'amenée d'air sec vers la zone supérieure de l'interstice d'air est ou sont intermittentes.

5. Procédé selon l'une des revendications 1 à 4,
**caractérisé en ce que** l'amenée de l'air sec vers la zone supérieure de l'interstice d'air ne se fait qu'à une température extérieure prédéterminée de l'air entourant le revêtement extérieur de l'avion, ou
**en ce que** l'amenée de l'air sec vers la zone supérieure de l'interstice d'air ne se fait qu'à une température extérieure de l'air entourant le revêtement extérieur de l'avion d'environ 0 °C ou moins ou d'environ -7 °C ou moins.

6. Dispositif pour la mise en œuvre du procédé selon l'une des revendications 1 à 5, comprenant un ou plusieurs conduits pour l'amenée d'air sec à travers une ou plusieurs ouvertures de sortie du conduit ou des conduits vers une zone supérieure d'un interstice d'air situé s'étendant entre la zone supérieure et une zone inférieure et situé entre le revêtement extérieur de l'avion et un isolant (1) qui est disposé entre une paroi de la cabine et le revêtement extérieur de l'avion,
**caractérisé en ce que** le conduit ou les conduits présente(nt) une ou plusieurs ouvertures d'entrée au niveau de la zone inférieure de l'interstice d'air, à travers laquelle ou lesquelles de l'air sec dans la zone inférieure de l'interstice d'air peut être aspiré, et
**en ce que** le conduit ou les conduits est ou sont relié(s) à un ou plusieurs ventilateurs (9) qui, en fonctionnement, génère(nt) une différence de pression dans le ou les conduits, qui déplace l'air sec de la ou des ouvertures d'entrée vers la ou les ouvertures de sortie.

7. Dispositif selon la revendication 6,
**caractérisé en ce que** le ou les ventilateurs (9) peut ou peuvent fonctionner par intermittence, et/ou
**en ce que** le ou les ventilateurs (9) sont disposés dans un espace situé au-dessus d'une partie supérieure de la paroi de la cabine.

8. Dispositif selon la revendication 6 ou 7,
**caractérisé en ce que** les ouvertures d'entrée se trouvent sur des premiers tronçons de conduit (5) qui s'étendent sous l'isolant (1) et/ou dans des passages dans l'isolant (1) entre l'interstice d'air et un espace situé entre l'isolant et la paroi de la cabine et qui sont reliés à des deuxièmes tronçons de conduit disposés dans l'espace situé entre l'isolant et la paroi de la cabine, et/ou
**en ce que** chaque ouverture d'entrée et/ou chaque ouverture de sortie est ou sont respectivement disposées dans la zone située entre deux membrures.

9. Dispositif selon l'une des revendications 6 à 8,
**caractérisé en ce que** les ouvertures de sortie se trouvent sur des troisièmes tronçons de conduit (8) qui s'étendent au-dessus de l'isolant et/ou dans d'autres passages dans l'isolant (1) entre l'espace, situé entre la paroi de la cabine et l'isolant (1), et l'interstice d'air et qui sont reliés aux deuxièmes tronçons de conduit.

10. Dispositif selon la revendication 8 ou 9,
**caractérisé en ce que** les deuxièmes tronçons de conduit sont reliés aux premiers tronçons de conduit (5) par l'intermédiaire de premières vannes.

11. Dispositif selon la revendication 9 ou 10,
**caractérisé en ce que** les deuxièmes tronçons de conduit sont reliés aux troisièmes tronçons de conduit (8) par l'intermédiaire de deuxièmes vannes.

12. Dispositif selon l'une des revendications 8 à 11,
**caractérisé en ce que** le ou les ventilateurs (9) sont reliés, sur son ou leur côté entrée et sur son ou leur côté sortie, respectivement aux deuxièmes tronçons de conduit.

13. Dispositif selon l'une des revendications 8 à 12,
**caractérisé en ce que** les deuxièmes tronçons de conduit comprennent un conduit collecteur (6) relié aux premiers tronçons de conduit (5), et/ou **en ce que** les deuxièmes tronçons de conduit comprennent un conduit distributeur (7) relié aux troisièmes tronçons de conduit (8).

14. Dispositif selon la revendication 13,
**caractérisé en ce que** le conduit distributeur (7) est raccordé au côté sortie d'un ventilateur (9), et
**en ce que** le conduit collecteur est raccordé au côté entrée du ventilateur (9).

15. Dispositif selon l'une des revendications 10 à 14,
**caractérisé en ce que** les premières vannes et/ou les deuxièmes vannes sont respectivement des vannes multivoies.
